# EUROPEAN PATENT APPLICATION

(11) **EP 2 474 432 A1**
(43) Date of publication of application: **11.07.2012**
(21) Application number: 11150203.5
(22) Date of filing: 05.01.2011
(51) Int. Cl.: B60H 1/34, B60R 13/02, B60H 1/24

(54) **Utility vehicle cab ventilation system**

(71) Applicant: Valtra Oy Ab, 44200 Suolahti (FI)
(72) Inventor: Wihinen, Kimmo, FIN-41350, Laukaa (FI)
(74) Representative: Morrall, Roger

(57) **Abstract**

A utility vehicle cab ventilation system is provided in which at least one open channel (30,32) is moulded into an interior trim component (22,24). The channel serves to convey air which is driven by a pump (42). Cover elements (34,36) engage in place over the channel and comprise vent holes which are distributed along its length. The channels provide a uniform distribution of clean air to the cab and can be designed around existing components (20). Furthermore, the integrating of ventilation components into the trim by moulding reduces the total number of components and saves assembly time and cost.

## Description

The invention relates to utility vehicles such as tractors and particularly to ventilation systems fitted within the cabs of said vehicles.

Traditionally, utility vehicle cabs are fitted with basic ventilation and air conditioning systems. Filtered air is typically pumped into the cab through vents fitted to the roof structure.

It is an object of the invention to provide an improved ventilation system for utility vehicles which improves the comfort for the driver.

It is another object of the invention to provide a ventilation system for utility vehicles which consists of fewer parts.

According to the present invention there is provided a ventilation system in a utility vehicle cab, the system comprising an open channel which is moulded into an interior trim component and serves to convey air which is driven by pump means, the system further comprising a cover element which engages in place over the channel and comprises vent holes which are distributed along its length. By moulding channels into the interior trim of the vehicle cab the number of components required for the ventilation system can be significantly reduced thereby saving cost and assembly time. Furthermore, the distribution of clean air within the cab is improved thus improving the driver's comfort.

The interior trim component is preferably formed by injection moulding which provides a simple route to integrating the open channels into existing trim. It should be recognised that injection moulding is a well known technique employed for manufacturing cab trim and so additional processing to form the channels is not required, thus saving costs. Alternatively, other moulding methods may be used such as vacuum moulding.

Although the invention can be applied to any trim component in a utility vehicle cab, a wheel fender cover (alternatively referred to as side upholstery or fender upholstery panel), which is traditionally disposed on at least one side of the driver's seat, lends itself well to providing a surface within which a channel in accordance with the invention can be incorporated. In a preferred arrangement, an open channel extends from the rear of the cab forwardly over the wheel fender for a substantial portion of the cab's length.

Alternatively, or in addition to, a channel may be formed in the inner roof upholstery of a roof part above the driver. As such, the vent holes are directed downwardly in this case.

Preferably the cross section of the channel, which is perpendicular to the general flow of air, has a substantially constant area along the length of the channel to maintain a substantially constant air velocity along said length. Advantageously, this improves the uniformity of air distribution along the channel.

In one embodiment of the invention the ventilation system comprises a plurality of open channels which are each moulded into an interior trim component and each having a respective cover element, wherein each channel is connected to another of said channels in a series arrangement by closed ducting. Advantageously, this provides a network of ventilation channels throughout the cab space which can be sourced with clean air from a single pump.

Further advantages of the invention will become apparent from the following description of a specific embodiment with reference to the appended drawings in which:-
- Figure 1: is a schematic perspective view of a tractor cab having a ventilation system in accordance with the present invention;
- Figure 2: is a perspective view of the cab of Figure 1 shown with the seat, steering wheel and other cab fittings removed;
- Figure 3: is a highly schematic plan view of the cab of Figure 1;
- Figure 4: is a perspective view of a single wheel arch trim component having an open channel open therein with accordance with the invention;
- Figure 5: is a sectional view through the open channel of Figure 4, and
- Figure 6: is a schematic view of a ventilation system in accordance with the invention.

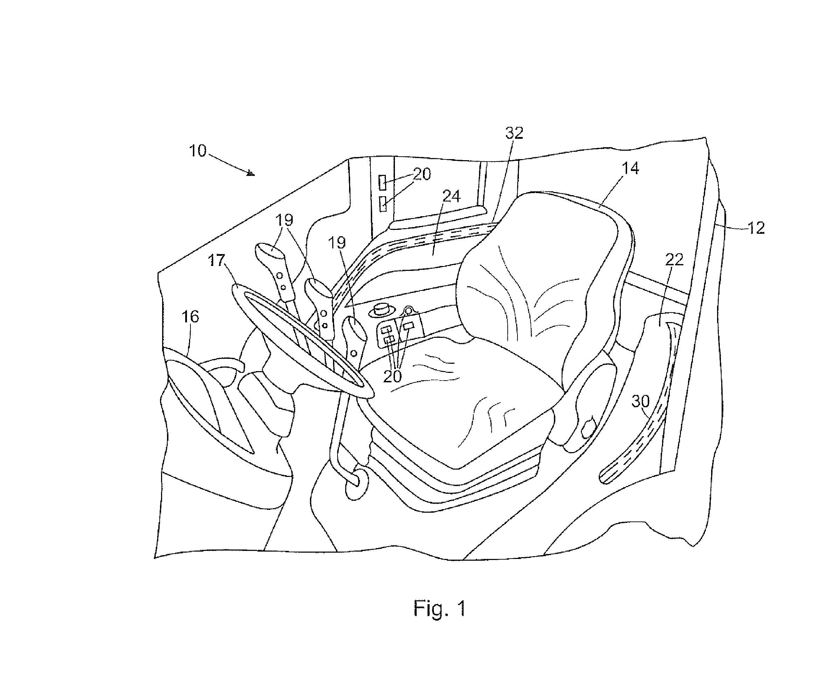

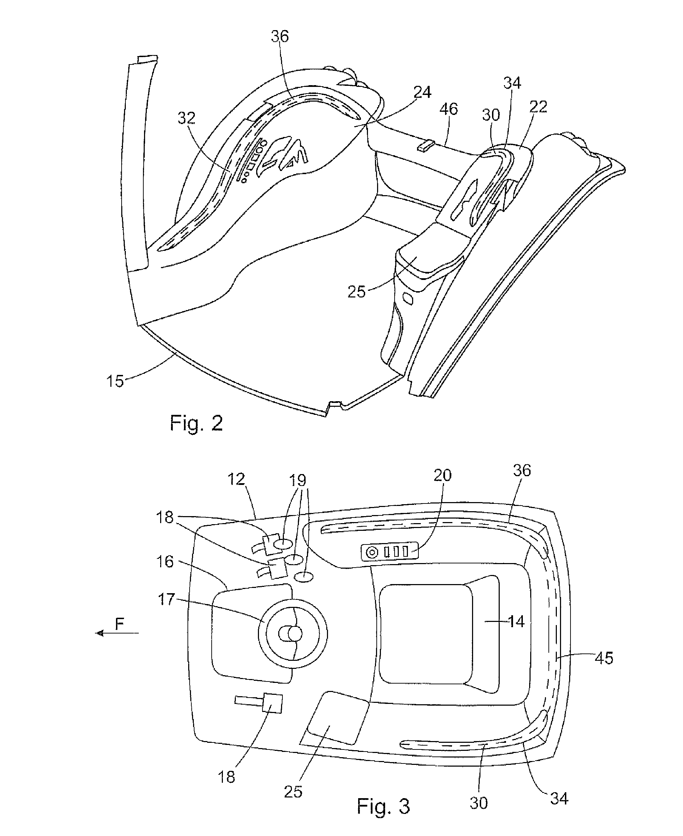

With reference to Figure 1, a tractor cab 10 comprises a driver's space which is enclosed by cab structure 12 which includes a frame, doors and windows. A driver's seat 14 is secured to a floor section 15 and faces forwards in the normal direction of travel as represented by arrow F in Figure 3. Located in front of the driver's seat 14, a steering console 16 has affixed thereto a steering wheel 17 which is within reach of the driver. The cab further includes various user interface devices such as pedals 18, gear levers 19 and switches 20. Located either side of the driver's seat 14 are wheel arch trim members 22,24 which are fixed in position and have a profile which conforms with the wheel arch which they cover. Disposed on a forward edge of the left hand wheel arch trim component is a folding passenger seat 25 shown in a stowed position in Figures 2 and 3. Each of the left and right hand wheel arch trim components 22,24 are formed of plastic and shaped by injection moulding. It should be understood that the cab 10 described above has a conventional layout.

In accordance with the invention the wheel arch trim components 22,24 have moulded into their exposed surface an open channel 30,32 each extending from the rear of cab 10 forwardly and conforming with the exposed profile of each wheel arch trim component. Each channel is designed around the existing features of the cab including switches 20 and other driver interfaces.

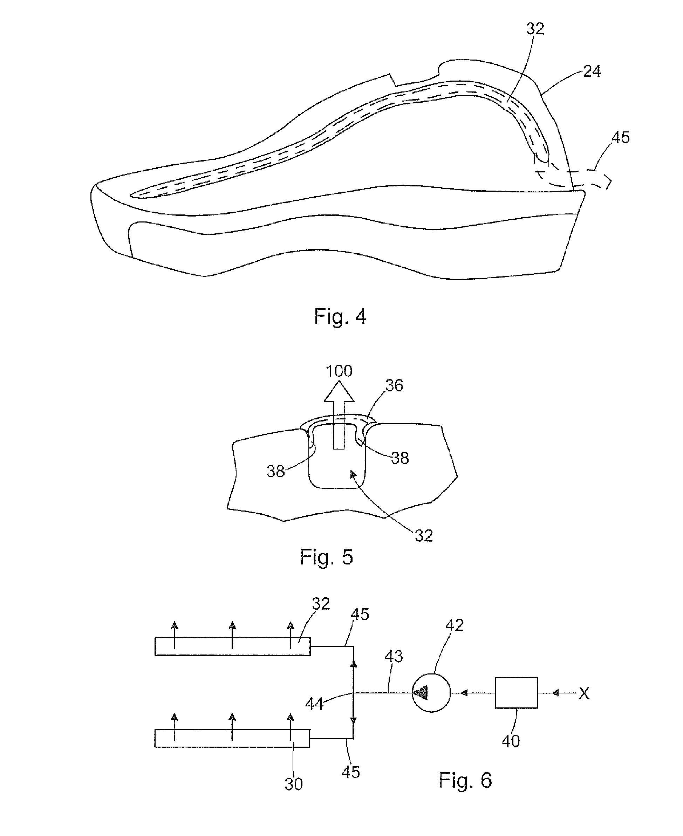

Each channel 30,32 is covered by an associated cover element 34,36 which engages in place over the channel 30,32 and comprises vent holes which are distributed along its length. With reference to Figure 5, each cover element 34,36 includes a series of clips 38 which secure the cover elements 34,36 in position over the respective channels 30,32.

The channels 30,32 have a depth and width of around 2cm which is uniform along the entirety of their length. However, it should be appreciated that the exact dimensions of the channel are not critical to the invention and a multitude of profiles can be used.

The ventilation system, with reference to Figure 6, draws in air from the surroundings, referenced at X, through a filter 40 by means of an electrically driven pump 43 which typically comprises a fan. The pump 42 may be located at any practical position on the tractor 10 such as within the engine compartment, under the cab floor, under the side upholstery, inside the steering console or inside the roof. The pump 42 propels the filtered air via pipe 43 to a junction 44 which divides the air flow into two sub-streams. Each sub-stream is conveyed to a respective channel wherein a first sub-stream is delivered to left hand channel 30 and second sub-stream is delivered to right hand channel 32. Each sub-stream is conveyed into the respective channel 30,32 via a hole formed within one end of each channel, said hole being connected to a respective pipe 45 (Figure 4).

The delivery pipes 45 can be hidden within existing components of the cab frame 12, for example the transverse rear window support as shown in Figure 2.

Once delivered to the respective channels 30,32 the clean air is distributed into the driver's space through the cover elements 34,36 as represented by arrow 100 in Figure 5.

Although shown as formed in the wheel arch trim components, channels may be formed in any practical trim components within the cab 10. For example, it is envisaged that a channel may be formed in upright trim components which cover upright support associated with the cab structure 12. Furthermore, channels may be formed in moulded sections of the roof which form interior trim. In a further example, a channel may be formed in the steering console 16 supplied with air via a pipe located under the floor section 15.

Separate channels are connected underneath the trim components by pipes which may, or may not, themselves be moulded into the trim.

When formed in the inner roof upholstery (not shown), the channels are upside-down so that air is delivered downwardly towards the driver. In this case, the pump/fan 42 is preferably located within the roof section.

Although shown with a continuous vent along the length the cover elements may have tailored vent profiles which release clean air at selected positions. Advantageously, this increases the design freedom for the ventilation system designer.

In summary, there is provided a utility vehicle cab ventilation system in which at least one open channel is moulded into an interior trim component. The channel serves to convey air which is driven by a pump. Cover elements engage in place over the channel and comprise vent holes which are distributed along its length. The channels provide a uniform distribution of clean air to the cab and can be designed around existing components. Furthermore, the integrating of ventilation components into the trim by moulding reduces the total number of components and saves assembly time and cost.

## Claims

1. A ventilation system in a utility vehicle cab, the system comprising an open channel which is moulded into an interior trim component and serves to convey air which is driven by pump means, the system further comprising a cover element which engages in place over the channel and comprises vent holes which are distributed along its length.

2. A ventilation system according to Claim 1, wherein the interior trim component is formed by injection moulding.

3. A ventilation system according Claim 1 or 2, wherein the interior trim component is located to one side of a driver's seat and covers at least part of a wheel fender.

4. A ventilation system according to Claim 3, wherein the channel extends in a generally longitudinal direction.

5. A ventilation system according to Claim 1 or 2, wherein the interior trim component forms part of inner roof upholstery and the vent holes are directed downwardly.

6. A ventilation system according to Claim 1, 2 or 3 wherein the interior trim component forms part of a driver console.

7. A ventilation system according to any preceding claim, wherein the cross section of the channel which is perpendicular to the general flow of air has a substantially constant area along the length of the channel to maintain a substantially constant air velocity along said length.

8. A ventilation system according to any preceding claim, comprising a plurality of open channels which are each moulded into an interior trim component and each having a respective cover element, wherein each channel is connected to another of said channels in a series arrangement by closed ducting.
